# EUROPÄISCHE PATENTSCHRIFT

(11) **EP 1 788 008 B1**
(45) Veröffentlichungstag und Bekanntmachung des Hinweises auf die Patenterteilung: **07.09.2011**
(21) Anmeldenummer: 06022595.0
(22) Anmeldetag: 30.10.2006
(51) Int. Cl.: C08G 18/08, C08G 18/28, C08G 18/62, C08G 18/67, C09D 175/04

(54) **Hydrophile Polyisocyanatgemische**
Hydrophilized polyisocyanate mixtures
Mélanges de polyisocyanates hydrophilisés

(30) Priorität: 10.11.2005 DE 102005053678
(43) Veröffentlichungstag der Anmeldung: 23.05.2007
(73) Patentinhaber: Bayer MaterialScience AG, 51368 Leverkusen (DE)
(72) Erfinder: Laas, Hans-Josef, 51519 Odenthal (DE); Wamprecht, Christian, 41472 Neuss (DE)

(56) Entgegenhaltungen:
- EP-A1- 0 540 985
- EP-A1- 0 965 604
- EP-A2- 1 050 551
- WO-A-99/67312
- US-A- 6 017 998

## Beschreibung

Die Erfindung betrifft neue hydrophile Polyisocyanatgemische auf Basis polyacrylatmodifizierter Polyisocyanate, ein Verfahren zu ihrer Herstellung und ihre Verwendung als Ausgangskomponente bei der Herstellung von Polyurethan-Kunststoffen, insbesondere als Vernetzer für wasserlösliche oder -dispergierbare Lackbindemittel oder -bindemittelkomponenten mit gegenüber Isocyanatgruppen reaktionsfähigen Gruppen.

Vor dem Hintergrund einer zunehmend strengeren Umweltgesetzgebung gewannen in den letzten Jahren wasserdispergierbare Polyisocyanate für verschiedene Anwendungsgebiete an Bedeutung. Sie finden heute insbesondere als Vernetzerkomponenten für qualitativ hochwertige wasserverdünnbare Zweikomponenten-Polyurethan-Lacke (2K-PUR-Lacke) oder als Zusatzmittel für wässrige Dispersionsklebstoffe Verwendung, dienen zur Vernetzung wässriger Dispersionen in der Textilausrüstung oder formaldehydfreier Textildruckfarben und eignen sich darüber hinaus beispielsweise auch als Hilfsmittel zur Naßverfestigung von Papier (vgl. z.B. EP-A 0 959 087 und hierin zitierte Literatur).

Zur Herstellung wasserdispergierbarer Polyisocyanate sind eine Vielzahl unterschiedlicher Verfahren bekannt, beispielsweise die Umsetzung hydrophober Polyisocyanate mit hydrophilen Polyetheralkoholen (siehe z.B. EP-B 0 206 059, EP-B 0 540 985 und EP-B 0 959 087), die Abmischung und/oder Umsetzung mit speziellen hydrophilen Polyetherurethanen (siehe z.B. EP-B 0 486 881 und WO 2005/047357), die Umsetzung mit ionischen Gruppen aufweisenden Verbindungen (siehe z.B. WO 01/88006) oder einfaches Abmischen hydrophober Polyisocyanate mit geeigneten gegenüber Isocyanatgruppen inerten Emulgatoren (siehe z.B. WO 97/31960).

Trotz ihrer breiten Marktakzeptanz für die unterschiedlichsten Anwendungen weisen die zur Zeit verfügbaren hydrophil-modifizierten Polyisocyanate Nachteile auf. Unabhängig von der Art der Modifizierung kommen in wässrigen 2K-PUR-Lacken heute überwiegend wasserdispergierbare Polyisocyanate auf Basis von 1,6-Diisocyanatohexan (HDI) zum Einsatz. Diese führen in der Regel bereits bei niedrigen Temperaturen zu Beschichtungen mit guten Beständigkeiten gegenüber chemischer und mechanischer Belastung, zeigen dabei aber eine in vielen Fällen nicht ausreichende Troclrnungsgeschwindigkeit und vergleichsweise geringe Endhärten. Hydrophile HDI-Polyisocyanate werden daher häufig in Kombination mit entsprechend modifizierten Polyisocyanaten auf Basis von Isophorondiisocyanat (IPDI) eingesetzt (siehe z.B. WO 2004/022623 und WO 2004/022624). Auf diese Weise kann die Trocknung der Lackfilme und insbesondere die Härteentwicklung erheblich beschleunigt werden. Zur vollständigen chemischen Vernetzung benötigen IPDI-Polyisocyanate allerdings Temperaturen im Bereich von 100°C oder darüber. Bei Raumtemperatur oder leicht forcierter Trocknung (ca. 60°C) erhält man zwar schnell grifftrockene, harte Lackfilme, die jedoch eine geringere Lösemittel- und Chemikalienbeständigkeit aufweisen als ausschließlich mit HDI-Polyisocyanaten vernetzte Beschichtungen.

Die US-A-6017998, EP-A-0965604, WO 99/67312 und EP-A-1050551 beschreiben Vernetzer auf Basis polyacrylatmodifizierter Polyisocyanate, die durch Umsetzung eines Polyisocyanates mit Polyacrylatpolyolen erhältlich sind.

Aufgabe der vorliegenden Erfmdung war es, neue hydrophil-modifizierte Polyisocyanate zur Verfügung zu stellen, die sich für sämtliche Anwendungsgebiete wasserdispergierbarer Polyisocyanate, insbesondere als Vernetzerkomponenten für wässrige Polyurethanlacke, eignen und nicht mit den Nachteilen des Standes der Technik behaftet sind.

Diese Aufgabe konnte nun mit der Bereitstellung der nachfolgend näher beschriebenen hydrophilen Polyisocyanatgemische gelöst werden.

Die vorliegende Erfmdung basiert auf der überraschenden Beobachtung, dass sich hydrophil modifizierte Polyisocyanate auf Basis neuartiger, polyacrylatstrukturen-enthaltender Polyisocyanate gegenüber den bekannten hydrophilen HDI-Polyisocyanaten durch eine stark verbesserte physikalische Trocknung auszeichnen und gleichzeitig im Gegensatz zu den bekannten hydrophilen IPDI-Polyisocyanaten bereits bei milden Aushärtebedingungen voll vernetzte Lackfilme höchster Lösemittel- und Chemikalienbeständigkeit liefern.

Gegenstand der Erfindung sind hydrophile Polyisocyanatgemische enthaltend
A) mindestens ein Polyisocyanat, das wenigstens eine Struktureinheit der Formel (I) enthält, 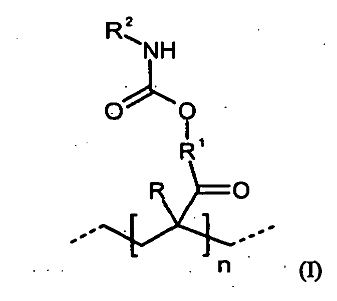 wobei
   - R: Wasserstoff oder eine Methylgruppe ist,
   - R¹: ein gegebenenfalls heteroatomhaltiger Kohlenwasserstoffrest mit bis zu 22 Kohlenstoffatomen ist,
   - R²: ein Kohlenwasserstoffrest mit wenigstens einer Isocyanatgruppe und darüber hinaus optional Urethan-, Allophanat-, Biuret-, Uretdion-, Isocyanurat- und/oder Iminooxadiazindioneinheiten ist und
   - n: für eine ganze Zahl von 1 bis 100 steht,
   und
B) gegebenenfalls weitere von A) verschiedene Polyisocyanate mit aliphatisch, cycloaliphatisch, aromatisch und/oder araliphatisch gebundenen Isocyanatgruppen
   und
C) mindestens einen ionischen und/oder nichtionischen Emulgator.

Gegenstand der Erfindung ist weiterhin die Verwendung der hydrophilen Polyisocyanatgemische als Ausgangskomponente bei der Herstellung von Polyurethankunststoffen, insbesondere als Vernetzerkomponente für wasserlösliche oder -dispergierbare Lackbindemittel oder Lackbindemittelkomponenten.

Die erfindungsgemäßen hydrophilen Polyisocyanatgemische enthalten in einer bevorzugten Form als Komponente A) mindestens ein polyacrylat-modifiziertes Polyisocyanat mit einem NCO-Gehalt von 5 bis 25 Gew.-%, vorzugsweise von 7 bis 22 Gew.-%, einer mittleren NCO-Funktionalität ≥ 2, vorzugsweise von 2,2 bis 6,0, und einer Viskosität bei 23°C von 150 bis 200 000 mPa·s. Diese speziellen Polyisocyanate A) enthalten eine Struktureinheit der Formel (I), 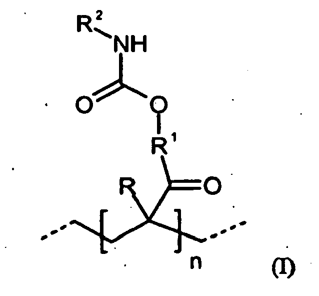 wobei
- R: Wasserstoff oder eine Methylgruppe ist,
- R¹: ein gegebenenfalls heteroatomhaltiger Kohlenwasserstoffrest mit bis zu 22 Kohlenstoffatomen ist,
- R²: ein Kohlenwasserstoffrest mit wenigstens einer Isocyanatgruppe und darüber hinaus optional Urethan-, Allophanat-, Biuret-, Uretdion-, Isocyanurat- und/oder Iminooxadiazindioneinheiten ist und

- n: eine ganze Zahl von 1 bis 100 1 ist,

Die Herstellung solcher polyacrylatmodifizierter Polyisocyanate ist bekannt. Sie erfolgt, wie in der nicht vorveröffentlichen DE0456849 beschrieben, durch Umsetzung eines Teils der Isocyanatgruppen eines Ausgangspolyisocyanates A1) mit mindestens einem acrylat- und/oder methacrylatgruppenhaltigen Monoalkohol A2) unter Urethanisierung und anschließende - oder bereits während der Urethanisierungsreaktion radikalisch initiierte - Polymerisation der ungesättigten Gruppen des so gebildeten Reaktionsproduktes im Sinne einer Homo- oder Copolymerisation mit gegebenenfalls weiteren ungesättigten Monomeren.

Geeignete Ausgangspolyisocyanate A1) zur Herstellung der polyacrylatmodifizierten Polyisocyanate A) sind beispielsweise beliebige durch Phosgenierung oder nach phosgenfreien Verfahren, wie z.B. durch thermische Urethanspaltung, zugängliche monomere Diisocyanate und Triisocyanate. Bevorzugte Diisocyanate sind solche des Molekulargewichtsbereichs 140 bis 400 g/mol mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate. Ein als Ausgangspolyisocyanat A1) besonders geeignetes monomeres Triisocyanat ist beispielsweise 4-Isocyanatomethyl-1,8-diisocyanatooctan.

Geeignete Ausgangspolyisocyanate A1) zur Herstellung der polyacrylatmodifizierten Polyisocyanate A) sind aber auch beliebige durch Modifizierung der genannten aliphatischen, cycloaliphatischen, araliphatischen und/oder aromatischen Diisocyanate erhältliche, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200 und EP-A 0 798 299 beispielhaft beschrieben sind.

Bevorzugt handelt es sich bei den Ausgangskomponenten A1) um Polyisocyanate der genannten Art mit ausschließlich aliphatisch und/oder cycloaliphatisch gebundenen Isocyanatgruppen, die eine mittlere NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% und einen Gehalt an monomeren Diisocyanaten von weniger als 1 Gew.-%, vorzugsweise weniger als 0,5 Gew.-% aufweisen.

Ganz besonders bevorzugte Ausgangskomponenten A1) sind Polyisocyanate der vorstehend genannten Art mit Isocyanuratstruktur auf Basis von HDI, IPDI und/oder 4,4'-Diisocyanatodicyclohexylmethan.

Zur Herstellung der polyacrylatmodifizierten Polyisocyanate A) werden die genannten Ausgangspolyisocyanate A1) mit geeigneten ungesättigten Monoalkoholen A2) umgesetzt. Hierbei handelt es sich beispielsweise um die bekannten hydroxyfunktionellen Ester der Acryl- und/oder Methacrylsäure, wie z.B. Hydroxyethylacrylat, Hydroxyethylmethacrylat, Hydroxypropylacrylat (bei der Anlagerung von Propylenoxid an Acrylsäure entstehendes Isomerengemisch), Hydroxypropylmethacrylat (bei der Anlagerung von Propylenoxid an Methacrylsäure entstehendes Isomerengemisch) und Butandiolmonoacrylat.

Weitere geeignete Monoalkohole A2) sind die Umsetzungsprodukte der vorstehend genannten Hydroxyester der Acryl- oder Methacrylsäure mit unterschiedlichen Mengen an cyclischen Lactonen oder Monoepoxiden, wobei als cyclisches Lacton bevorzugt ε-Caprolacton, als bevorzugte Monoepoxide Ethylenoxid, Propylenoxid oder deren Mischungen eingesetzt werden.

Auch Umsetzungsprodukte von Glycidylacrylat oder Glycidylmethacrylat mit beliebigen Monocarbonsäuren oder Umsetzungsprodukte von Acryl- oder Methacrylsäure mit beliebigen Monoepoxiden sind als hydroxyfunktionelle Komponente A2) geeignet.

Neben diesen acrylat- und methacrylatfunktionellen Monoalkoholen können als Monoalkohole A2) schließlich auch Allylalkohol oder dessen Alkoxylierungsprodukte, wie z.B. ein-, zwei- oder mehrfach ethoxylierter Allylalkohol eingesetzt werden.

Bevorzugte Monoalkohole A2) zur Herstellung der polyacrylatmodifizierten Polyisocyanate A) sind aber die genannten acrylat- und methacrylatfunktionellen Monoalkohole oder beliebige Gemische dieser Verbindungen.

In einer nicht bevorzugten Ausführungsart können auch Mischungen der oben genannten Monoalkohole mit nicht OH-funktionellen Acrylaten eingesetzt werden.

Die Umsetzung der Ausgangspolyisocyanate A1) mit den ungesättigten Monoalkoholen A2) kann lösemittelfrei oder gegebenenfalls in einem geeigneten, gegenüber Isocyanatgruppen inerten Lösemittel erfolgen. Geeignete Lösemittel sind beispielsweise die an sich bekannten üblichen Lacklösemittel, wie z.B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Bei der zunächst ablaufenden Urethanisierung werden A1) mit A2) in solch einem Verhältnis miteinander umgesetzt, dass nur ein Teil der NCO-Gruppen von A1) verbraucht wird. Bevorzugt wird so viel der Komponente A2) eingesetzt, dass maximal 40 Mol-%, vorzugsweise maximal 30 Mol-%, besonders bevorzugt maximal 25 Mol-% und ganz besonders bevorzugt maximal 20 Mol%, bezogen auf die Isocyanatgruppen der Ausgangspolyisocyanate A1) zu Urethangruppen umgesetzt werden.

Die Urethanisierung findet bereits bei Raumtemperatur (23°C) statt, kann aber falls gewünscht auch bei niedrigeren oder höheren Temperaturen durchgeführt werden. Zur Beschleunigung der Reaktion, kann die Umsetzung auch bei Temperaturen bis zu 160°C durchgeführt werden.

Zur Beschleunigung der Urethanisierungsreaktion können bei der Herstellung der polyacrylatmodifizierten Polyisocyanate A) gegebenenfalls aber auch die üblichen aus der Polyurethanchemie bekannten Katalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethyl-aminocyclohexan, N,N'-Dimethylpiperazin oder Metallsalze wie Eisen(III)-chlorid, Aluminium-tri(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Wismut-2-ethyl-1-hexanoat, Wismut-octoat, Molybdänglykolat oder beliebige Gemische solcher Katalysatoren.

Im Anschluss an die Urethanisierungsreaktion, weniger bevorzugt auch bereits während diese Umsetzung noch läuft, werden die ungesättigten Gruppen des Reaktionsproduktes durch eine radikalisch initiierte (Co)Polymerisation zur Reaktion gebracht.

Geeignete Initiatoren für die Polymerisation der ungesättigten Gruppen der Urethanisierungsprodukte aus A1) und A2) sind übliche Radikalstarter auf Azo- oder Peroxidbasis, jedoch nur solche, die in dem unten genannten Temperaturbereich eine für die Polymerisation genügend lange Halbwertszeit von ca. 5 Sekunden bis ca. 60 Minuten besitzen. Geeignet sind beispielsweise Azodiisobuttersäurenitril, Azo-bis-2-methylvaleronitril, 2,2'-Azobis-(2-methylpropannitril), 2,2'-Azobis-(2-methylbutannitril), 1,1'-Azobis(cyclohexancarbonitril), symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; Peroxydicarbonate, wie z.B. Diethyl-, Diisopropyl-, Dicyclohexyl- und Dibenzoylperoxydicarbonat, tert.-Butyl-peroxy-isopropylcarbonat, tert.-Butylperoxy-2-ethylhexanoat, tert.-Butylperoxy-3,5,5-trimethylhexanoat, tert.-Butylperbenzoat, tert.-Butylperoxydiethylacetat, tert.-Butylperoxyisobutyrat, Hydroperoxide, wie z.B. tert.-Butylhydroperoxid, Cumolhydroperoxid, Dialkylperoxide, wie z.B. Dicumylperoxid, tert.-Butylcumylperoxid, Di-tert.-butylperoxid, Di-tert.-amylperoxid, 1,1-Di-tert.-butylperoxy-3,3,5-trimethylcyclohexan oder 1,1-Di-tert.-butylperoxycyclohexan.

Die Initiatoren werden in Mengen von 0,05 bis 15 Gew.-%, vorzugsweise 0,1 bis 10 Gew.-%, insbesondere 0,2 bis 8 Gew.-%, bezogen auf die Gesamtmenge der eingesetzten Monoalkohole A2) eingesetzt.

Im Allgemeinen erfolgt die Polymerisation im Temperaturbereich von 50 bis 240°C, vorzugsweise 60 bis 220°C und besonders bevorzugt 70 bis 200°C. Die Polymerisation kann dabei unter einem Druck von bis zu 15 bar durchgeführt werden.

Zur Durchführung der Polymerisationsreaktion wird die durch Reaktion von A1) mit A2) erhaltene urethanmodifizierte Polyisocyanatmischung auf die gewünschte Polymerisationstemperatur aufgeheizt. Dann wird der Radikalinitiator zur Reaktionsmischung zudosiert und die durch den Zerfall des Radikalinitiators initiierte radikalische Polymerisation bei der eingestellten Polymerisationstemperatur durchgeführt. Während der Polymerisationsreaktion kann die Temperatur gegebenenfalls auch verändert werden, um spezielle Molekulargewichtsverteilungen einzustellen. Nach Ende der Polymerisation wird das Reaktionsgemisch auf Raumtemperatur abgekühlt und man erhält die polyacrylatmodifizierten Polyisocyanate A) in Form farbheller viskoser Flüssigkeiten oder, bei Mitverwendung von Lösungsmitteln, entsprechender Lösungen.

Die erfindungsgemäßen hydrophilen Polyisocyanatgemische enthalten gegebenenfalls weitere von A) verschiedene Polyisocyanate B) mit aliphatisch, cycloaliphatisch, aromatisch und/oder araliphatisch gebundenen Isocyanatgruppen. Bei diesen Polyisocyanaten handelt es sich um die oben als geeignete Komponenten A1) beschriebenen monomerenarmen, durch Modifizierung der entsprechender Diisocyanate erhältliche Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Bevorzugt handelt es sich bei den gegebenenfalls mitzuverwendenden Polyisocyanaten B) um die genannten Polyisocyanate mit ausschließlich aliphatisch und/oder cycloaliphatisch gebundenen Isocyanatgruppen, ganz besonders bevorzugt um Polyisocyanate mit Isocyanuratstruktur auf Basis von HDI, IPDI und/oder 4,4'-Diisocyanatodicyaohexylmethan.

Die erfindungsgemäßen hydrophilen Polyisocyanatgemische enthalten mindestens einen ionischen und/oder nichtionischen Emulgator C).

Hierbei handelt es sich um beliebige grenzflächenaktive Stoffe, die aufgrund ihrer Molekülstruktur in der Lage sind, Polyisocyanate bzw. Polyisocyanatgemische in wässrigen Emulsionen über einen längeren Zeitraum zu stabilisieren.

Geeignete nichtionische Emulgatoren sind Umsetzungsprodukte C1) von Polyisocyanaten entsprechend denen der Komponenten A) und/oder B) mit hydrophilen Polyetheralkoholen.

Geeignete hydrophile Polyetheralkohole sind ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z.B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 g/mol sein, wie z.B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis-(hydroxymethyl)-1,3-propandiol oder 1,3,5-Tris(2-hydroxyethyl)-isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole sind solche, die unter Verwendung der oben genannten Monoalkohole des Molekulargewichtsbereiches 32 bis 150 g/mol als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Die Herstellung solcher nichtionischen Emulgatoren ist prinzipiell bekannt und beispielsweise in EP-B 0 206 059 und EP-B 0 540 985 beschrieben.

Die Herstellung kann durch Umsetzung von Polyisocyanaten entsprechend denen der Polyisocyanatkomponenten A) und/oder B) mit den genannten Polyetheralkoholen entweder in einem separaten Reaktionsschritt mit anschließendem Vermischen mit den in eine hydrophile Form zu überführenden Polyisocyanatkomponenten A) und gegebenenfalls B) oder aber in der Weise erfolgen, dass man die Polyisocyanatkomponenten A) und gegebenenfalls B) mit einer entsprechenden Menge der Polyetheralkohole abmischt, wobei sich spontan ein erfindungsgemäßes hydrophiles Polyisocyanatgemisch bildet, das neben nicht umgesetztem acrylat-modifiziertem Polyisocyanat A) und gegebenenfalls weiteren Polyisocyanaten B) den sich in situ aus dem Polyetheralkohol und einem Teil der Komponenten A) und gegebenenfalls B) bildenden Emulgator C1) enthält.

Die Herstellung dieser Art nichtionischer Emulgatoren C1) erfolgt im Allgemeinen bei Temperaturen von 40 bis 180°C, vorzugsweise 50 bis 150°C, unter Einhaltung eines NCO-/OH-Äquivalent-Verhältnisses von 2:1 bis 400:1, vorzugsweise von 4:1 bis 140:1.

Bei der erstgenannten Variante der separaten Herstellung der nichtionischen Emulgatoren C1) werden diese vorzugsweise unter Einhaltung eines NCO/OH-Äquivalentverhältnisses von 2 : 1 bis 6 : 1 hergestellt. Bei der in situ-Herstellung der Emulgatoren C1) kann selbstverständlich ein hoher Überschuss an Isocyanatgruppen innerhalb des oben genannten breiten Bereichs zur Anwendung gelangen.

Die Reaktion der Polyisocyanate mit den genannten hydrophilen Polyetheralkoholen zu nichtionischen Emulgatoren C1) kann nach dem in EP-B 0 959 087 beschriebenen Verfahren auch so geführt werden, dass die durch NCO/OH-Reaktion primär gebildeten Urethangruppen zumindest anteilig, vorzugsweise zu mindestens 60 mol-%, zu Allophanatgruppen weiter umgesetzt werden. In diesem Fall werden Reaktionspartner im oben genannten NCO/OH-Äquivalentverhältnis bei Temperaturen von 40 bis 180°C, vorzugsweise 50 bis 150°C, in der Regel in Gegenwart der in den zitierten Patentschriften angeführten, zur Beschleunigung der Allophanatisierungsreaktion geeigneten Katalysatoren zur Reaktion gebracht.

Ein weiterer Typ geeigneter nichtionischer Emulgatoren C) stellen beispielsweise auch Umsetzungsprodukte von monomeren Diisocyanaten oder Diisocyanatgemischen mit den oben genannten ein- oder mehrwertigen hydrophilen Polyetheralkoholen mit einem NCO/OH Verhältnis von 1:1, insbesondere mit reinen Polyethylenglycolmonomethyletheralkoholen, die im statistischen Mittel 5 bis 50, bevorzugt 5 bis 25 Ethylenoxideinheiten aufweisen, dar. Die Herstellung solcher Emulgatoren C2) ist ebenfalls bekannt und beispielsweise in EP-B 0 486 881 beschrieben.

Gegebenenfalls können die Polyetherurethan-Emulgatoren C2) aber auch im Anschluss an das Abmischen der Komponenten in den vorstehend beschriebenen Mengenverhältnissen in Gegenwart geeigneter Katalysatoren mit den acrylat-modifizierten Polyisocyanaten A) und gegebenenfalls weiteren Polyisocyanaten B) unter Allophanatisierung umgesetzt werden. Dabei entstehen ebenfalls erfindungsgemäße hydrophile Polyisocyanatgemische, die neben nicht umgesetztem acrylat-modifiziertem Polyisocyanat A) und gegebenenfalls weiteren Polyisocyanaten B) einen sich in situ aus dem Emulgator C2) und einem Teil der Komponenten A) und gegebenenfalls B) bildenden weiteren nichtionischen Emulgatortyp C3) mit Allophanatstruktur enthalten. Auch die in situ-Herstellung solcher Emulgatoren C3) ist bereits bekannt und beispielsweise in WO 2005/047357 beschrieben.

Die erfindungsgemäßen hydrophilen Polyisocyanatgemische können anstelle der beispielhaft beschriebenen nichtionischen Emulgatoren auch Emulgatoren mit ionischen, insbesondere anionischen Gruppen enthalten.

Solche ionischen Emulgatoren C) stellen sulfonatgruppenhaltige Emulgatoren C4) dar, wie sie beispielsweise nach dem Verfahren der WO 01/88006 durch Umsetzung von Polyisocyanaten entsprechend denen der Polyisocyanatkomponenten A) und/oder B) mit 2-(Cyaclohexylamino)-ethansulfonsäure und/oder 3-(Cyclohexylamino)-propansulfonsäure erhältlich sind. Diese Umsetzung findet in der Regel bei Temperaturen von 40 bis 150°C, vorzugsweise 50 bis 130°C, unter Einhaltung eines Äquivalent-Verhältnisses von NCO-Gruppen zu Aminogruppen von 2:1 bis 400:1, vorzugsweise von 4:1 bis 250:1, statt, wobei zur Neutralisation der Sulfonsäuregruppen tertiäre Amine mitverwendet werden. Geeignete Neutralisationsamine sind beispielsweise tertiäre Monoamine, wie z.B. Trimethylamin, Triethylamin, Tripropylamin, Tributylamin, Dimethylcyclohexylamin, Diisopropylethylamin, N-Methylmorpholin, N-Ethylmorpholin, N-Methylpiperidin, oder N-Ethylpiperidin, tertiäre Diamine, wie z.B. 1,3-Bis-(dimethylamino)-propan, 1,4-Bis-(dimethylamino)-butan oder N,N'-Dimethylpiperazin, oder, allerdings weniger bevorzugt, Alkanolamine, wie z.B. Dimethylethanolamin, Methyldiethanolamin oder Triethanolamin.

Wie bereits für die nichtionischen Emulgatoren C1) beschrieben, kann auch die Herstellung dieser ionischen Emulgatoren C4) entweder in einem separaten Reaktionsschritt mit anschließendem Vermischen mit den in eine hydrophile Form zu überführenden Polyisocyanatkomponenten A) und gegebenenfalls B) oder aber in situ in diesen Polyisocyanatkomponenten erfolgen, wobei sich direkt ein erfindungsgemäßes hydrophiles Polyisocyanatgemisch bildet, das neben nicht umgesetztem acrlyat-modifiziertem Polyisocyanat A) und gegebenenfalls weiteren Polyisocyanaten B) den sich in situ aus den Aminosulfonsäuren, dem Neutralisationsamin und einem Teil der Komponenten A) und gegebenenfalls B) bildenden Emulgator C4) enthält.

Ein weiterer Typ geeigneter Emulgatoren C) sind solche, die in einem Molekül gleichzeitig ionische und nichtionische Strukturen enthalten. Bei diesen Emulgatoren C5) handelt es sich z.B. um mit tertiären Aminen, wie z.B. den oben genannten Neutralisationsaminen neutralisierte Alkylphenolpolyglykolether-phosphate und -phosphonate oder Fettalkoholpolyglykolether-phosphate und -phosphonate, wie sie beispielsweise in WO 97/31960 zur Hydrophilierung von Polyisocyanaten beschrieben sind, oder auch um mit solchen tertiären Aminen neutralisierte Alkylphenolpolyglykolethersulfate oder Fettalkoholpolyglykolethersulfate.

Unabhängig von der Art des Emulgators C) und dessen Herstellung wird dessen Menge bzw. die Menge der bei einer in situ-Herstellung des Emulgators den acrylat-modifizierten Polyisocyanaten A) und gegebenenfalls weiteren Polyisocyanaten B) zugesetzten ionischen und/oder nichtionischen Komponenten im Allgemeinen so bemessen, dass die letztlich erhaltenen erfindungsgemäßen hydrophilen Polyisocyanatgemische eine die Dispergierbarkeit des Polyisocyanatgemisches gewährleistenden Menge, vorzugsweise 1 bis 50 Gew.-%, besonders bevorzugt 2 bis 30 Gew.-%, bezogen auf die Gesamtmenge der Komponenten A) bis C) enthalten.

Die erfindungsgemäßen hydrophilen Polyisocyanatgemische stellen klare, praktisch farblose Produkte der vorstehend genannten Zusammensetzung dar, die gegebenenfalls auch in Lösemitteln, wie z.B. den oben genannten üblichen Lacklösemitteln, gelöster Form vorliegen können. Sie lassen sich in der Regel leicht, ohne Einsatz hoher Scherkräfte durch bloßes Einrühren in Wasser in sedimentationsstabile Dispersionen überführen lassen.

Gegenstand der Erfindung sind ferner hydrophilierte Polyisocyanate auf Basis von aromatischen, araliphatischen, cycloaliphatischen und/oder aliphatischen Polyisocyanaten mit einem NCO-Gehalt von 5 bis 25 Gew.-%, einer NCO-Funktionalität ≥ 2, einer Viskosität in lösemittelfreiem Zustand von 150 bis 200 000 mPa·s bei 23°C, gemessen mit einem Rotationsviskosimeter gemäß DIN 53019, dadurch gekennzeichnet, dass sie wenigstens eine Struktureinheit der Formel (I) enthalten, 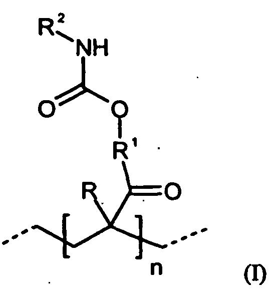 wobei
- R: Wasserstoff oder eine Methylgruppe ist,
- R¹: ein gegebenenfalls heteroatomhaltiger Kohlenwasserstoffrest ist und
- R²: ein Kohlenwasserstoffrest mit wenigstens einer Isocyanatgruppe und darüber hinaus optional Urethan-, Allophanat-, Biuret-, Uretdion-, Isocyanurat- und/oder Iminooxadiazindioneinheiten ist und
- n: eine Zahl ≥ 1 ist
und darüber hinaus

Polyethereinheiten der Formel (II) 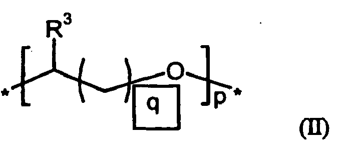 wobei
- R³: Wasserstoff oder ein C₁- bis C₁₀-Alkylrest und
- p: eine Zahl zwischen 1 bis 1000, und
- q: 1 bis 3 ist
und/oder Sulfonatgruppen (als SO₃)
und/oder Phosphatgruppen (als PO₄)

Bevorzugt ist R³ = Wasserstoff oder eine Methylgruppe und p gleich 1 bis 300.

Bevorzugt sind die Polyether der Formel (II) über Urethangruppen an das Polyisocyanat-Gerüst gebunden.

Selbstverständlich können die NCO-Gruppen der erfindungsgemäßen hydrophilen Polyisocyanatgemische auch in mit aus der Polyurethanchemie an sich bekannten Blockierungsmitteln blockierter Form in Kombination mit den oben genannten wässrigen Lackbindemitteln oder Lackbindemittelkomponenten im Sinne von wässrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol, Diisopropylamin, Dicyclohexylamin, N-tert.-butyl-benzylamin Cyclopentanon-2-carboxymethylester, Cyclopentanon-2-carboxyethylester oder beliebige

Gemische dieser Blockierungsmittel.

Ein weiterer Gegenstand der Erfindung ist ein Verfahren zur Herstellung hydrophiler Polyisocyanatgemische der oben genannten Art, dadurch gekennzeichnet, dass die Polyisocyanatkomponenten A) und gegebenenfalls B) mit einem ionischen und/oder nichtionischen Emulgator C) vermischt werden und/oder ein solcher Emulgator durch Umsetzung der Polyisocyanatkomponenten A) und gegebenenfalls B) mit hydrophilen gegenüber Isocyanaten reaktiven ionischen und/oder nichtionischen Verbindungen in situ erzeugt wird, wobei unabhängig vom Herstellverfahren die Mengen der Ausgangskomponenten so gewählt werden, dass der Emulgator in einer Menge von 2 bis 60 Gew.-%, bezogen auf die Gesamtmenge der Komponenten A) bis C), vorliegt.

Die hervorragende Dispergierbarkeit in Verbindungen mit der Polyacrylatmodifizierung der Ausgangspolyisocyanate A) stellt insbesondere für die Verwendung der erfindungsgemäßen hydrophilen Polyisocyanate in wässrigen 2K-PUR-Lacken einen Vorteil dar, da sich auf diese Weise hochvemetzte Beschichtungen erhalten lassen, die sich durch sehr kurze Härtungszeiten auszeichnen. Aufgrund der im Vergleich zu den bisher bekannten hydrophilen, nicht-polyacrylatmodifizierten Polyisocyanaten schnelleren physikalischen Antrocknung bei gleichzeitig rascher chemischer Vernetzung zeigen unter Verwendung der erfmdungsgemäßen Polyisocyanatgemische beschichtete Gebrauchsgegenstände deutlich früher eine ausreichende Beständigkeit gegenüber Lösemitteln und Chemikalien und können früher in Gebrauch genommen werden. Die unter Verwendung der erfindungsgemäßen hydrophilen Polyisocyanatgemische erhältlichen Lackfilme zeichnen sich darüber hinaus durch eine hohe Härte und Elastizität, eine ausgezeichnete Witterungs- und Chemikalienbeständigkeit sowie einen hohen Glanz aus.

Gegebenenfalls können den erfindungsgemäßen hydrophilen Polyisocyanatgemischen vor der Emulgierung noch weitere nichthydrophilierte Polyisocyanate, insbesondere Lackpolyisocyanate der oben unter B) genannten Art, zugesetzt werden, wobei die Mengenverhältnisse bevorzugt so gewählt werden, dass die resultierenden Polyisocyanatgemische ebenfalls erfindungsgemäße hydrophile Polyisocyanatgemische darstellen, da diese im Allgemeinen aus Gemischen aus
(i) erfindungsgemäß hydrophil modifizierten Polyisocyanatgemischen und
(ii) unmodifizierten Polyisocyanaten der beispielhaft genannten Art bestehen.

In solchen Mischungen übernehmen die erfindungsgemäßen hydrophilen Polyisocyanatgemische die Funktion eines Emulgators für den nachträglich zugemischten Anteil an nicht hydrophilen Polyisocyanaten.

Die erfindungsgemäßen hydrophilen Polyisocyanatgemische stellen wertvolle Ausgangsmaterialien zur Herstellung von Polyurethan-Kunststoffen nach dem Isocyanat-Polyadditionsverfahren dar.

Gegenstand der Erfindung sind daher auch Beschichtungsmittel enthaltend die erfindungsgemäßen hydrophilierten polyacrylatmodifizierten Polyisocyanatgemische.

In diesen Beschichtungsmitteln werden die hydrophilen Polyisocyanatgemische vorzugsweise in Form wässriger Emulsionen eingesetzt, die in Kombination mit in Wasser dispergierten Polyhydroxylverbindungen in unblockierter Form im Sinne von wässrigen ZweikomponentenSystemen, in mit Blockierungsmitteln der oben genannten Art blockierter Form im Sinne von wässrigen Einkomponenten-Systemen zur Umsetzung gebracht werden können.

Besonders bevorzugt werden die erfindungsgemäßen hydrophilen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden, durch Verwendung von dem Fachmann bekannten mechanischen Hilfsmitteln oder auch unter Verwendung von Zweikomponenten-Spritzpistolen erfolgen.

Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet.

In diesem Zusammenhang seien als Lackbindemittel oder Lackbindemittelkomponenten beispielhaft erwähnt: In Wasser gelöste oder dispergierte, Hydroxylgruppen aufweisende Polyacrylate, insbesondere solche des Molekulargewichtsbereichs 1 000 bis 10 000 g/mol, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Zu den Bindemitteln zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wässrige Lackbindemittel werden die erfindungsgemäßen hydrophilen Polyisocyanatgemische im Allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen hydrophilen Polyisocyanatgemische in untergeordneten Mengen auch nichtfunktionellen wässrigen Lackbindemitteln zur Erzielung ganz spezieller Eigenschaften, beispielsweise als Additiv zur Haftverbesserung zugemischt werden.

Als Untergründe für die mit Hilfe der erfindungsgemäßen hydrophilen Polyisocyanatgemische formulierten wässrigen Beschichtungen kommen beliebige Substrate in Betracht, wie z.B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erfindungsgemäßen Beschichtungsmittel formulierten wässrigen Beschichtungsmittel, denen gegebenenfalls die auf dem Lacksektor üblichen Hilfs- und Zusatzmittel, wie z.B. Verlaufshilfsmittel, Farbpigmente, Füllstoffe, Mattierungsmittel oder Emulgatoren, zugegeben werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Neben der bevorzugten Verwendung als Vernetzerkomponenten für wässrige 2K-PUR-Lacke eignen sich die erfindungsgemäßen hydrophilen Polyisocyanatgemische hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

### Beispiele:

Im Folgenden beziehen sich alle Prozentangaben, soweit nichts anders vermerkt, auf das Gewicht.

Die angegebenen Kenndaten wurden nach folgenden Methoden bestimmt:
- Viskosität:: Rotationsviskosimeter VT 550 der Firma Haake GmbH, Karlsruhe, DE, MV-DIN Becher bei Viskosität < 10.000 mPa·s/23°C, SV-DIN Becher bei Viskosität > 10.000 mPa·s/23°C
- NCO-Gehalt:: Rücktitration mit 1 mol/l HCl nach Reaktion mit einem Dibutylaminüberschuss in Aceton, Grundlage DIN EN ISO 11909
- Hazen-Farbzahl:: Hazen-Farbzahl nach DIN 53995, Farbzahlmessgerät Lico^{®} 400, Dr. Lange GmbH, Berlin, DE

### Herstellung der polyacrylatmodifizierten Polyisocyanate A)

### Ausgangspolyisocyanate A1)

- Desmodur N 3300:: Isocyanuratgruppenhaltiges Polyisocyanat auf Basis von HDI, lösemittelfrei, NCO-Gehalt 21,8%, Viskosität: 3000 mPa·s/23°C (Bayer MaterialScience AG, Leverkusen, DE).
- **Desmodur^{®} N 3600:**: Isocyanuratgruppenhaltiges Polyisocyanat auf Basis von HDI, lösemittelfrei, NCO-Gehalt 23,0%, Viskosität: 1200 mPa·s/23°C (Bayer MaterialScience AG, Leverkusen, DE).
- **Desmodur^{®} XP 2410:**: Iminooxadiazindiongruppenhaltiges Polyisocyanat auf Basis von HDI, lösemittelfrei, NCO-Gehalt 23,7%, Viskosität: 700 mPa·s/23°C (Bayer MaterialScience AG, Leverkusen, DE).

### Ungesättigte Monoalkohole A2)

- **HEA:**: Hydroxyethylacrylat
- **HEMA:**: Hydroxyethylmethacrylat

### Polymerisationsinitiator

- **Peroxan^{®} PO 49B:**: tert.-Butylperoxy-2-ethylhexanoat, 49 %ig in Butylacetat (Pergan GmbH, Bocholt, DE)

### Allgemeine Arbeitsanweisung

In einem 1 Liter Dreihalskolben mit Rührer, Rückflusskühler und Tropftrichter wurde das jeweilige Ausgangspolyisocyanat A1) gegebenenfalls mit Butylacetat als Lösungsmittel vorgelegt und unter Stickstoffatmosphäre auf 130°C aufgeheizt. Dann wurde der ungesättigte Monoalkohol A2) innerhalb von 10 Minuten zudosiert und anschließend für 1 Stunde bei 130°C weitergerührt, bevor die gewünschte Polymerisationstemperatur (T) eingestellt wurde. Nach Erreichen dieser Temperatur wurde der Polymerisationsinitiator, in der Regel Peroxan^{®} PO 49B, in einer Portion zugegeben und noch 1 Stunde bei der eingestellten Polymerisationstemperatur gerührt. Dann wurde auf Raumtemperatur abgekühlt, wobei farbhelle, viskose Polyisocyanate A) erhalten wurden.

### Polyacrylatmodifiziertes Polyisocyanat A (I)

Entsprechend der allgemeinen Arbeitsanweisung wurden 95,5 Gew.-Teile Desmodur^{®} N 3300 lösemittelfrei mit 4,3 Gew.-Teilen HEMA umgesetzt und anschließend mittels 0,2 Gew.-Teilen Peroxan^{®} PO 49B bei 130°C polymerisiert. Es resultierte ein farbloses Polyisocyanat mit einem Festgehalt von 100 Gew.-%, einer Viskosität (23°C) von 12500 mPa·s, einem Isocyanatgehalt von 20,4 Gew.-% und einer Farbzahl von 11 APHA.

### Polyacrylatmodifiziertes Polyisocyanat A (II)

Entsprechend der allgemeinen Arbeitsanweisung wurden 97,0 Gew.-Teile Desmodur^{®} N 3600 lösemittelfrei mit 2,85 Gew.-Teilen HEA umgesetzt und anschließend mittels 0,15 Gew.-Teilen Peroxan^{®} PO 49B bei 130°C polymerisiert. Es resultierte ein farbloses Polyisocyanat mit einem Festgehalt von 100 Gew.-%, einer Viskosität (23°C) von 3700 mPa·s, einem Isocyanatgehalt von 21,1 Gew.-% und einer Farbzahl von 11 APHA.

### Polyacrylatmodifiziertes Polyisocyanat A (III)

Entsprechend der allgemeinen Arbeitsanweisung wurden 96,0 Gew.-Teile Desmodur^{®} N 3600 lösemittelfrei mit 3,8 Gew.-Teilen HEA umgesetzt und anschließend mittels 0,2 Gew.-Teilen Peroxan^{®} PO 49B bei 100°C polymerisiert. Es resultierte ein farbloses Polyisocyanat mit einem Festgehalt von 100 Gew.-%, einer Viskosität (23°C) von 12300 mPa·s, einem Isocyanatgehalt von 20,5 Gew.-% und einer Farbzahl von 10 APHA.

### Polyacrylatmodifiziertes Polyisocyanat A (IV)

Entsprechend der allgemeinen Arbeitsanweisung wurden 95,5 Gew.-Teile Desmodur^{®} N 3600 lösemittelfrei mit 4,3 Gew.-Teilen HEMA umgesetzt und anschließend mittels 0,2 Gew.-Teilen Peroxan^{®} PO 49B bei 130°C polymerisiert. Es resultierte ein farbloses Polyisocyanat mit einem Festgehalt von 100 Gew.-%, einer Viskosität (23°C) von 6700 mPa·s, einem Isocyanatgehalt von 20,5 Gew.-% und einer Farbzahl von 11 APHA.

### Polyacrylatmodifiziertes Polyisocyanat A (V)

Entsprechend der allgemeinen Arbeitsanweisung wurden 86,4 Gew.-Teile Desmodur^{®} XP 2410 in 5,0 Gew.-Teilen Butylacetat mit 3,4 Gew.-Teilen HEA umgesetzt und anschließend mittels 0,2 Gew.-Teilen tert.-Butylperoxy-2-ethylhexanoat, gelöst in 5,0 Gew.-Teilen Butylacetat, bei 100°C polymerisiert. Es resultierte ein farblose Lösung eines Polyisocyanates mit einem Festgehalt von 90 Gew.-%, einer Viskosität (23°C) von 1180 mPa·s, einem Isocyanatgehalt von 19,8 Gew.-% und einer Farbzahl von 16 APHA.

### Beispiel 1 (erfindungsgemäß Emulgator C1))

900 g (4,37 val) des polyacrylatmodifizierten Polyisocyanates A (I) wurden bei 100°C unter trockenem Stickstoff und Rühren vorgelegt, innerhalb von 30 min mit 100 g (0,29 val) eines auf Methanol gestarteten, monofunktionellen Polyethylenoxidpolyethers eines mittleren Molekulargewichtes von 350 versetzt und bei dieser Temperatur weiter gerührt, bis der NCO-Gehalt der Mischung nach etwa 2 h auf den einer vollständigen Urethanisierung entsprechenden Wert von 17,1 % gefallen war. Nach Abkühlen auf Raumtemperatur lag ein erfindungsgemäßes hydrophiles Polyisocyanatgemisch mit folgenden Kenndaten vor:

| | |
|---|---|
| Festgehalt: | 100 % |
| NCO-Gehalt: | 17,1 % |
| Viskosität (23°C): | 14800 mPas |

### Beispiel 2 (erfindungsgemäß Emulgator C1))

900 g (4,52 val) des polyacrylatmodifizierten Polyisocyanates A (II) wurden bei 100°C unter trockenem Stickstoff und Rühren vorgelegt, innerhalb von 30 min mit 100 g (0,20 val) eines auf Methanol gestarteten, monofunktionellen Polyethylenoxidpolyethers eines mittleren Molekulargewichtes von 500 versetzt und bei dieser Temperatur weiter gerührt, bis der NCO-Gehalt der Mischung nach etwa 2 h auf den einer vollständigen Urethanisierung entsprechenden Wert von 18,2 % gefallen war. Nach Abkühlen auf Raumtemperatur lag ein erfindungsgemäßes hydrophiles Polyisocyanatgemisch mit folgenden Kenndaten vor:

| | |
|---|---|
| Festgehalt: | 100 % |
| NCO-Gehalt: | 18,2 % |
| Viskosität (23°C): | 4700 mPas |

### Beispiel 3 (erfindungsgemäß Emulgator C1))

900 g (4,52 val) des polyacrylatmodifizierten Polyisocyanates A (II) wurden bei 100°C unter trockenem Stickstoff und Rühren vorgelegt, innerhalb von 30 min mit 100 g (0,20 val) des in Beispiel 2 beschriebenen Polyetheralkohols versetzt und bei dieser Temperatur weiter gerührt, bis der NCO-Gehalt der Mischung nach etwa 2 h auf den einer vollständigen Urethanisierung entsprechenden Wert von 18,2 % gefallen war. Nach Zugabe von 0,01 g Zink-(II)-2-ethyl-1-hexanoat als Allophanatisierungskatalysator stieg die Temperatur des Reaktionsgemisches aufgrund der freiwerdenden Reaktionswärme bis auf 105°C an. Nach Abklingen der Exothermie, etwa 30 min nach Katalysatorzugabe, wurde die Reaktion durch Zugabe von 0,01 g Benzoylchlorid abgebrochen und das Reaktionsgemisch auf Raumtemperatur abgekühlt. Es lag ein erfindungsgemäßes hydrophiles Polyisocyanatgemisch mit folgenden Kenndaten vor:

| | |
|---|---|
| Festgehalt: | 100 % |
| NCO-Gehalt: | 17,3% |
| Viskosität (23°C): | 12600 mPas |

### Beispiel 4 (erfindungsgemäß Emulgator C2))

150 g (0,3 val) des in Beispiel 2 beschriebenen Polyetheralkohols wurden mit 80 g (0,3 val) eines Gemisches aus 80 Teilen 2,4-TDI und 20 Teilen 2,6-TDI versetzt und bei 60°C gerührt, bis IRspektroskopisch keine Isocyanatgruppen mehr nachweisbar waren. Nach Abkühlen auf 30°C wurden 1300 g des polyacrylatmodifizierten Polyisocyanates A (I) zugemischt und man erhielt ein erfindungsgemäßes hydrophiles Polyisocyanatgemisch mit folgenden Kenndaten:

| | |
|---|---|
| Festgehalt: | 100 % |
| NCO-Gehalt: | 18,3 % |
| Viskosität (23°C): | 13500 mPas |

### Beispiel 5 (erfindungsgemäß Emulgator C4))

980 g (4,78 val) des polyacrylatmodifizierten Polyisocyanates A (III) wurden zusammen mit 20 g (0,09 val) 3-(Cyclohexylamino)-propansulfonsäure (CAPS), 11,5 g (0,09 mol) Dimethylcyclohexylamin und 253 g 1-Methoxypropyl-2-acetat unter trockenem Stickstoff 5 Stunden bei 80°C gerührt. Nach Abkühlen auf Raumtemperatur lag eine praktisch farblose klare Lösung eines erfindungsgemäßen hydrophilen Polyisocyanatgemisches mit folgenden Kenndaten vor:

| | |
|---|---|
| Festgehalt: | 80 % |
| NCO-Gehalt: | 15,6 % |
| Viskosität (23°C): | 1300 mPas |

### Beispiel 6 (erfindungsgemäß Emulgator C4))

950 g (4,64 val) des polyacrylatmodifizierten Polyisocyanates A (IV) wurden zusammen mit 50 g (0,23 val) 3-(Cyclohexylamino)-propansulfonsäure (CAPS), 29 g (0,23 mol) Dimethylcyclohexylamin und 257 g 1-Methoxypropyl-2-acetat unter trockenem Stickstoff 5 Stunden bei 80°C gerührt. Nach Abkühlen auf Raumtemperatur lag eine praktisch farblose klare Lösung eines erfindungsgemäßen hydrophilen Polyisocyanatgemisches mit folgenden Kenndaten vor:

| | |
|---|---|
| Festgehalt: | 80 % |
| NCO-Gehalt: | 14,4 % |
| Viskosität (23°C): | 1870 mPas |

### Beispiel 7 (erfindungsgemäß Emulgator C4))

1000 g (4,71 val) des polyacrylatmodifizierten Polyisocyanates A (V) wurden zusammen mit 30 g (0,14 val) 3-(Cyclohexylamino)-propansulfonsäure (CAPS), 18 g (0,14 mol) Dimethylcyclohexylamin und 5 g Butylacetat unter trockenem Stickstoff 5 Stunden bei 80°C gerührt. Nach Abkühlen auf Raumtemperatur lag eine praktisch farblose klare Lösung eines erfindungsgemäßen hydrophilen Polyisocyanatgemisches mit folgenden Kenndaten vor:

| | |
|---|---|
| Festgehalt: | 90 % |
| NCO-Gehalt: | 18,2 % |
| Viskosität (23°C): | 3400 mPas |

**Beispiel 8** (Vergleich gemäß EP-B 0 540 985 Emulgator C1))

870 g (4,52 val) Desmodur^{®} N 3300 wurden bei 100°C unter trockenem Stickstoff und Rühren vorgelegt, innerhalb von 30 min mit 130 g (0,37 val) des in Beispiel 1 beschriebenen Polyetheralkohols versetzt und bei dieser Temperatur weiter gerührt, bis der NCO-Gehalt der Mischung nach etwa 2 h auf den einer vollständigen Urethanisierung entsprechenden Wert von 17,4 % gefallen war. Nach Abkühlen auf Raumtemperatur lag ein farbloses, klares Polyisocyanatgemisch mit folgenden Kenndaten vor:

| | |
|---|---|
| Festgehalt: | 100 % |
| NCO-Gehalt: | 17,4% |
| Viskosität (23°C): | 3400 mPas |

**Beispiel 9** (Vergleich gemäß EP-B 0 540 985 Emulgator C1))

870 g (2,47 val) eines 70 %ig in Butylacetat gelöst vorliegenden Isocyanuratgruppen-haltigen Polyisocyanates auf Basis von IPDI mit einem NCO-Gehalt von 11,9 % und einer Viskosität von 600 mPas (23°C) (Desmodur^{®} Z 4470 BA, Bayer MaterialScience AG, Leverkusen, DE), wurden zusammen mit weiteren 391 g Butylacetat bei 100°C unter trockenem Stickstoff und Rühren vorgelegt, innerhalb von 30 min mit 91 g (0,26 val) des in Beispiel 1 beschriebenen Polyetheralkohols versetzt und anschließend bei dieser Temperatur weitergerührt, bis der NCO-Gehalt der Mischung nach etwa 2,5 h auf den einer vollständigen Urethanisierung entsprechenden Wert von 9,3 % gefallen war.

Nach Abkühlen auf Raumtemperatur wurden 30 Gew.-Teile der vorliegenden klaren Polyisocyanatlösung mit 70 Gew.-Teilen des Polyisocyanatgemisches aus Vergleichsbeispiel 8 abgemischt. Das so erhaltene hydrophile Polyisocyanatgemisch wies die folgenden Kenndaten auf:

| | |
|---|---|
| Festgehalt: | 91 % |
| NCO-Gehalt: | 15,0 % |
| Viskosität (23°C): | 2500 mPas |

### Beispiel 10 (Verwendung als Vernetzer für wässrige 2K-PUR-Läcke; erfindungsgemäß [a] und Vergleiche [b] und [c])

100 Gew.-Teile einer wässrigen, colöserfreien, hydroxyfunktionellen Polyacrylatdispersion mit einem Festkörpergehalt von 43 % und einem OH-Gehalt von 2,5 %, bezogen auf Festharz, im Wesentlichen bestehend aus 48,0 % Methylmethacrylat, 27,4 % n-Butylacrylat, 21,6 % Hydroxy-C₃-alkylmethacrylat (Anlagerungsprodukt von Propylenoxid an Methacrylsäure) und 3,0 % Acrylsäure, werden mit 0,5 Gew.-Teilen eines handelsüblichen Entschäumers (Foamaster TCX, Henkel) gemischt. Die Zubereitung ist unbegrenzt lagerstabil.

Dem obengenannten Ansatz setzt man 24,5 Gew.-Teile des erfindungsgemäßen Polyisocyanates aus Beispiel 1 zu (entsprechend einem Äquivalentverhältnis von Isocyanatgruppen zu alkoholischen Hydroxylgruppen von 1,5 : 1) und homogenisiert durch intensives Rühren (2000 U/min). Anschließend wird der Festkörpergehalt durch Zugabe von Wasser auf 40 % eingestellt.

Zum Vergleich wurden jeweils aus 100 Gew.-Teilen der oben beschriebenen hydroxyfunktionellen Polyacrylatdispersion und 24,0 Gew.-Teilen des Polyisocyanates aus Beispiel 8 bzw. 27,9 Gew.-Teilen einer Mischung der Vergleichspolyisocyanate aus Beispiel 8 und 9 im Verhältnis 70 : 30 % nach dem oben beschriebenen Verfahren ein Lack hergestellt. Die Äquivalentverhältnisse von Isocyanatgruppen zu alkoholischen Hydroxylgruppen betrugen wiederum 1,5 : 1.

Die Verarbeitungszeit der applikationsfertigen Lacke betrug etwa 3 Stunden. Die Lacke wurden in einer Nassfilm-Schichtdicke von 150 µm (ca. 60 µm trocken) auf Glasplatten appliziert und nach 20-minütigem Ablüften unter forcierten Bedingungen (30 min / 60°C) getrocknet. Es wurden Lackfilme mit folgenden Eigenschaften erhalten:

| **Beispiel 10** | | **[a]** | **[b]** | **[c]** |
|---|---|---|---|---|
| | | (erf.-gemäß) | (Vergleich) | (Vergleich) |
| **Polyisocyanat aus** | | Beispiel 1 | Beispiel 8 | Beispiel 9 |
| **Glanz (20°) ^{a)}** | | 91 | 89 | 88 |
| **Haze ^{b)}** | | 8,5 | 8,1 | 11 |
| **Pendelhärte ^{c)} [s]** | sofort / nach 1 d | 134/165 | 77/134 | 141/181 |
| **Trocknung ^{d)}** | T3 [+ min] | 10 | 15 | 10 |
| | T4 [+ min] | 45 | 110 | 40 |
| Spanschnitt ^{e)} | | 0 | 1 | 3 |
| **Lösemittelbeständigkeit ^{f)}** | | | | |
| Wasser | (30 Min.) | 0 | 0 | 0 |
| Isopropanol/Wasser 1:1 | (1 Min.) | 0 | 0 - 1 | 2 |
| MPA/Xylol 1:1 | (1 Min.) | 0 | 1 | 1 |
| Butylglykol | (1 Min.) | 0 | 0-1 | 1 |
| Aceton | (1 Min.) | 1 | 1 | 3 |

| | | | | |
|---|---|---|---|---|
| ^{a)} Glanz Gardner (20°-Winkel) (DIN 67530) ^{b)} Glanzschleier /Haze (DIN EN ISO 13803) ^{c)} Pendelhärte nach König (DIN 53157) ^{d)} Trockengrad (DIN 53150) ^{e)} Bewertung: 0 - 5 (0 = sehr gut; 5 = schlecht) ^{f)} nach 1 d; Bewertung: 0 - 5 (0 = Lackfilm unverändert; 5 = völlig aufgelöst) | | | | |

Alle drei Polyisocyanate liefern hochglänzende Lackfilme mit sehr geringen Haze-Werten. Der Lack auf Basis des erfindungsgemäß hergestellten hydrophilen Polyisocyanatgemisches aus Beispiel 1 trocknet jedoch erheblich schneller, als der mit dem auf Basis des nicht polyacrylatmodifizierten HDI-Trimerisates hergestellten Polyisocyanat aus Vergleichsbeispiel 8 vernetzte Lack und weist gleichzeitig auch eine höhere Härte und bessere Lösemittelbeständigkeiten auf. Die Verwendung des IPDI-haltigen Polyisocyanates aus Vergleichsbeispiel 9 führt zwar ebenfalls zu einer schnellen Trocknung, liefert aber einen spröden Lackfilm mit deutlich geringeren Lösemittelbeständigkeiten.

### Beispiel 11 bis 14 (Verwendung als Vernetzer für wässrige 2K-PUR-Lacke; erfindungsgemäß)

Nach dem in Beispiel 10 beschriebenen Verfahren wurden ausgehend von der in Beispiel 10 beschriebenen hydroxylgruppenhaltigen Polyacrylatdispersion sowie den erfindungsgemäßen hydrophilen Polyisocyanatgemischen aus Beispiel 2, 3, 4 und 5 Klarlacke hergestellt. Das Äquivalentverhältnis von NCO- zu OH-Gruppen betrug dabei in allen Fällen 1,5 : 1. Die fertig formulierten Lacke wurden in einer Nassfilm-Schichtdicke von 150 µm (ca. 60 µm trocken) auf Glasplatten appliziert und nach 20 minütigem Ablüften unter forcierten Bedingungen (30 min / 60°C) getrocknet. Die nachfolgende Tabelle zeigt die Zusammensetzungen (Gew.-Teile) der Lacke sowie die lacktechnischen Daten der daraus erhaltenen Beschichtungen.

| **Beispiel** | | **11** | **12** | **13** | **14** |
|---|---|---|---|---|---|
| Polyacrylatdispersion aus | Beispiel 10 | 100 | 100 | 100 | 100 |
| Polyisocyanat aus | Beispiel 2 | 23,0 | - | - | - |
| | Beispiel 3 | - | 24,1 | - | - |
| | Beispiel 4 | - | - | 22,8 | - |
| | Beispiel 5 | - | - | - | 26,8 |
| Foamaster TCX | | 0,5 | 0,5 | 0,5 | 0,5 |
| Glanz (20°) ^{a)} | | 90 | 90 | 89 | 88 |
| Haze ^{b)} | | 8,2 | 8,0 | 8,5 | 10,5 |
| Pendelhärte ^{c)} [s] | sofort/ 1 d | 137 / 166 | 140 / 171 | 134 / 165 | 142/178 |
| Trocknung ^{d)} | T3 [+ min] | 10 | 5 | 15 | 0 |
| | T4 [+ min] | 40 | 35 | 45 | 30 |
| Lösemittelbeständigkeit ^{f)} | | | | | |
| Wasser | (30 Min.) | 0 | 0 | 0 | 0 |
| Isopropanol/Wasser 1:1 | (1 Min.) | 0 | 0 | 0 - 1 | 0 |
| MPA/Xylol 1:1 | (1 Min.) | 0 | 0 | 0 - 1 | 0 |
| Butylglykol | (1 Min.) | 0 | 0 | 0 - 1 | 0 |
| Aceton | (1 Min.) | 1 | 0 - | 1 | 0 |

| | | | | | |
|---|---|---|---|---|---|
| a) Bewertung siehe Beispiel 10) | | | | | |

Auch die erfindungsgemäßen hydrophilen Polyisocyanatgemische aus Beispiel 2 bis 5 zeigen als Vernetzerkomponenten für wässrige 2K-PUR-Lacke gegenüber den nicht polyacrylatmodifizierten Polyisocyanatvernetzern aus Vergleichsbeispiel 8 und 9 (siehe Beispiel 10 [b] und [c]) die bereits in Beispiel 10 für das erfindungsgemäße hydrophile Polyisocyanatgemisch aus Beispiel 1 (siehe Beispiel 10 [a]) beschriebenen Vorteile bezüglich Härte, Lösemittelbeständigkeit und schneller Trocknung.

## Patentansprüche

1. Hydrophile Polyisocyanatgemische enthaltend
A) mindestens ein Polyisocyanat, das wenigstens eine Struktureinheit der Formel (I) enthält, 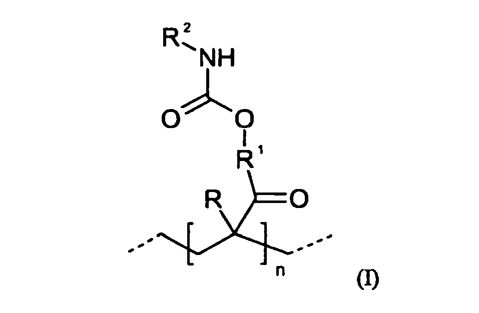 wobei
R Wasserstoff oder eine Methylgruppe ist,
R¹ ein gegebenenfalls heteroatomhaltiger Kohlenwasserstoffrest mit bis zu 22 Kohlenstoffatomen ist und
R² ein Kohlenwasserstoffrest mit wenigstens einer Isocyanatgruppe und darüber hinaus optional Urethan-, Allophanat-, Biuret-, Uretdion-, Isocyanurat- und/oder Iminooxadiazindioneinheiten ist und
n für eine ganze Zahl von 1 bis 100 steht,
und erhältlich ist durch Umsetzung eines Teils der Isocyanatgruppen eines Ausgangspolyisocyanates A1) mit mindestens einem acrylat- und/oder methacrylatgruppenhaltigen Monoalkohol A2) unter Urethanisierung und anschließender -oder bereits während der Urethanisierungsreaktion radikalisch initiierter - Polymerisation der ungesättigten Gruppen des so gebildeten Reaktionsproduktes im Sinne einer Homo- oder Copolymerisation mit gegebenenfalls weiteren ungesättigten Monomeren,
wobei so viel der Komponente A2) eingesetzt wird, dass maximal 40 Mol-% bezogen auf die Isocyanatgruppen der Ausgangspolyisocyanate A1) zu Urethangruppen umgesetzt werden,
B) gegebenenfalls weitere von A) verschiedene Polyisocyanate mit aliphatisch, cycloaliphatisch, aromatisch und/oder araliphatisch gebundenen Isocyanatgruppen
und
C) mindestens einen ionischen und/oder nichtionischen Emulgator.

2. Hydrophile Polyisocyanatgemische gemäß Anspruch 1, **dadurch gekennzeichnet, dass** die in Komponente A) eingesetzten polyacrylatmodifizierten Polyisocyanate einen NCO-Gehalt von 5 bis 25 Gew.-% und eine mittleren NCO-Funktionalität ≥ 2, eine Viskosität bei 23°C von 150 bis 200 000 mPa·s aufweisen.

3. Hydrophile Polyisocyanatgemische gemäß Anspruch 1 oder 2, **dadurch gekennzeichnet, dass** die Polyisocyanate der Polyisocyanatkomponenten A) und B) ausschließlich aliphatisch und/oder cycloaliphatisch gebundene Isocyanatgruppen aufweisen.

4. Hydrophile Polyisocyanatgemische gemäß einem der Ansprüche 1 bis 3, **dadurch gekennzeichnet, dass** es sich bei der Emulgatorkomponente C) um Umsetzungprodukte von Polyisocyanaten mit einwertigen, im statistischen Mittel von 5 bis 35 Ethylenoxideinheiten aufweisenden Polyalkylenoxidpolyetheralkoholen handelt.

5. Hydrophile Polyisocyanatgemische gemäß einem der Ansprüche 1 bis 4, **dadurch gekennzeichnet, dass** es sich bei der Emulgatorkomponente C) um Umsetzungprodukte der Polyisocyanatkomponenten A) und/oder B) mit 2-(Cyclohexylamino)-ethansulfonsäure und/oder 3-(Cyclohexylamino)-propansulfonsäure handelt.

6. Hydrophile Polyisocyanatgemische gemäß Anspruch 2, **dadurch gekennzeichnet dass** die in Komponente A) eingesetzten polyacrylatmodifizierten Polyisocyanate zusätzlich Polyethereinheiten der Formel (II), 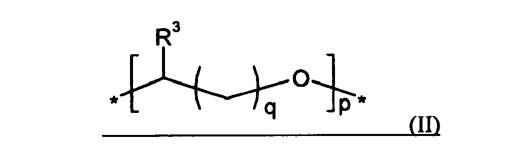 wobei
R³ Wasserstoff oder ein C₁-bis C₁₀-Alkylrest und
p eine Zahl zwischen 1 bis 1000, und
q 1 bis 3 ist,
und/oder Sulfonatgruppen (als SO₃)
und/oder Phosphatgruppen (als PO₄) enthalten.

7. Verfahren zur Herstellung hydrophiler Polyisocyanatgemische gemäß einem der Ansprüche 1 bis 5, **dadurch gekennzeichnet, dass** die Polyisocyanatkomponenten A) und gegebenenfalls B) mit einem ionischen und/oder nichtionischen Emulgator C) vermischt werden und/oder ein solcher Emulgator durch Umsetzung der Polyisocyanatkomponenten A) und gegebenenfalls B) mit hydrophilen gegenüber Isocyanaten reaktiven ionischen und/oder nichtionischen Verbindungen in situ erzeugt wird, wobei unabhängig vom Herstellverfahren die Mengen der Ausgangskomponenten so gewählt werden, dass der Emulgator in einer Menge von 2 bis 60 Gew.-%, bezogen auf die Gesamtmenge der Komponenten A) bis C), vorliegt.

8. Verwendung der hydrophilen Polyisocyanatgemische gemäß einem der Ansprüche 1 bis 6 als Ausgangskomponente bei der Herstellung von Polyurethankunststoffen oder als Vernetzerkomponente für wasserlösliche oder -dispergierbare Lackbindemittel oder Lackbindemittelkomponenten.

9. Beschichtungsmittel enthaltend hydrophile Polyisocyanate gemäß einem der Ansprüche 1 bis 6.

10. Substrate beschichtet mit Beschichtungsmitteln gemäß Anspruch 9.

## Claims

1. Hydrophilic polyisocyanate mixtures comprising
A) at least one polyisocyanate containing at least one structural unit of the formula (I) 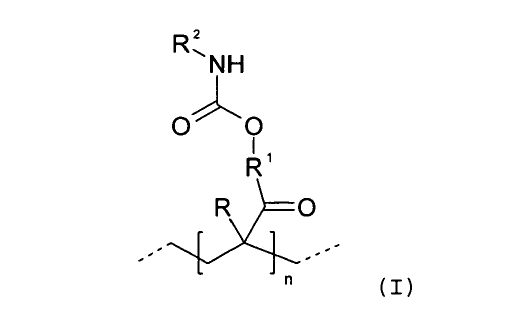 where
R is hydrogen or a methyl group,
R¹ is an optionally heteroatom-containing hydrocarbon radical having up to 22 carbon atoms and
R² is a hydrocarbon radical containing at least one isocyanate group and in addition, optionally, urethane, allophanate, biuret, uretdione, isocyanurate and/or iminooxadiazinedione units and
n is an integer from 1 to 100,
and is obtainable by reaction of some of the isocyanate groups of a starting polyisocyanate A1) with at least one monoalcohol A2) containing acrylate and/or methacrylate groups, with urethanization, and subsequent polymerization - or polymerization initiated free-radically even during the urethanization reaction - of the unsaturated groups of the resultant reaction product in the manner of a homopolymerization or copolymerization with optionally further unsaturated monomers, the amount of component A2) employed being such that not more than 40 mol%, based on the isocyanate groups of the starting polyisocyanates A1), are converted into urethane groups,
B) optionally further, non-A) polyisocyanates containing aliphatically, cycloaliphatically, aromatically and/or araliphatically attached isocyanate groups
and
C) at least one ionic and/or nonionic emulsifier.

2. Hydrophilic polyisocyanate mixtures according to Claim 1, **characterized in that** the polyacrylate-modified polyisocyanates used in component A) have an NCO content of 5% to 25% by weight and an average NCO-functionality ≥ 2, and a viscosity at 23°C of 150 to 200 000 mPa·s.

3. Hydrophilic polyisocyanate mixtures according to Claim 1 or 2, **characterized in that** the polyisocyanates of polyisocyanate components A) and B) contain exclusively aliphatically and/or cycloaliphatically attached isocyanate groups.

4. Hydrophilic polyisocyanate mixtures according to any one of Claims 1 to 3, **characterized in that** the emulsifier component C) comprises reaction products of polyisocyanates with monofunctional polyalkylene oxide polyether alcohols containing on average from 5 to 35 ethylene oxide units.

5. Hydrophilic polyisocyanate mixtures according to any one of Claims 1 to 4, **characterized in that** the emulsifier component C) comprises reaction products of polyisocyanate components A) and/or B) with 2-(cyclohexylamino)ethanesulphonic acid and/or 3-(cyclohexylamino)propanesulphonic acid.

6. Hydrophilic polyisocyanate mixtures according to Claim 2, **characterized in that** the polyacrylate-modified polyisocyanates used in component A) further comprise polyether units of the formula (II) 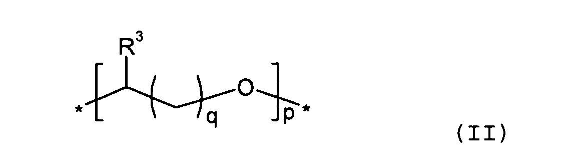 where
R³ is hydrogen or a C₁ to C₁₀ alkyl radical and
p is a number between 1 to 1000, and
q is 1 to 3
and/or sulphonate groups (as SO₃)
and/or phosphate groups (as PO₄).

7. Process for preparing hydrophilic polyisocyanate mixtures according to any one of Claims 1 to 5, **characterized in that** the polyisocyanate components A) and optionally B) are mixed with an ionic and/or nonionic emulsifier C) and/or an emulsifier of said kind is generated in situ by reacting the polyisocyanate components A) and optionally B) with hydrophilic, isocyanate-reactive ionic and/or nonionic compounds, the amounts of the starting components being chosen, irrespective of the preparation process, such that the emulsifier is present in an amount of 2% to 60% by weight, based on the total amount of components A) to C).

8. Use of the hydrophilic polyisocyanate mixtures according to any one of Claims 1 to 6 as a starting component in the production of polyurethane plastics or as a crosslinker component for water-soluble or water-dispersible film-forming binders or film-forming binder components.

9. Coating compositions comprising hydrophilic polyisocyanates according to any one of Claims 1 to 6.

10. Substrates coated with coating compositions according to Claim 9.

## Revendications

1. Mélanges hydrophiles de polyisocyanates, contenant
A) au moins un polyisocyanate qui contient au moins une unité de structure de formule (I), 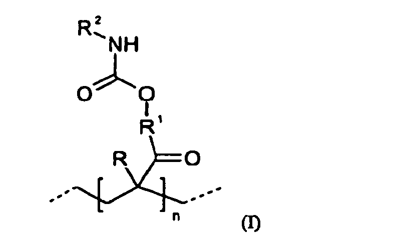 où
R représente hydrogène ou un groupe méthyle,
R¹ représente un radical hydrocarboné contenant le cas échéant des hétéroatomes, comprenant jusqu'à 22 atomes de carbone et
R² représente un radical hydrocarboné présentant au moins un groupe isocyanate et de plus éventuellement des unités uréthane, allophanate, biuret, uretdione, isocyanurate et/ou iminooxadiazinedione et
n vaut un nombre entier de 1 à 100,
et qui peut être obtenu par transformation d'une partie des groupes isocyanate d'un polyisocyanate de départ A1) avec au moins un monoalcool A2) contenant des groupes acrylate et/ou méthacrylate avec uréthanisation et polymérisation consécutive - ou déjà initiée par voie radicalaire pendant la réaction d'uréthanisation - des groupes insaturés du produit de réaction ainsi formé dans le sens d'une homopolymérisation ou d'une copolymérisation avec le cas échéant d'autres monomères insaturés, en utilisant une quantité de composant A2) telle qu'on transforme au maximum 40% en mole, par rapport aux groupes isocyanate, des polyisocyanates de départ A1) en groupes uréthane,
B) le cas échéant d'autres polyisocyanates, différents de A), avec des groupes isocyanate liés aliphatiquement, cycloaliphatiquement, aromatiquement et araliphatiquement et
C) au moins un émulsifiant ionique et/ou non ionique.

2. Mélanges hydrophiles de polyisocyanates selon la revendication 1, **caractérisés en ce que** les polyisocyanates modifiés par polyacrylate utilisés dans le composant A) présentent une teneur en NCO de 5 à 25% en poids, une fonctionnalité NCO moyenne ≥ 2 et une viscosité à 23°C de 150 à 200 000 mPa.s.

3. Mélanges hydrophiles de polyisocyanates selon la revendication 1 ou 2, **caractérisés en ce que** les polyisocyanates des composants polyisocyanate A) et B) présentent exclusivement des groupes isocyanate liés aliphatiquement et/ou cycloaliphatiquement.

4. Mélanges hydrophiles de polyisocyanates selon l'une quelconque des revendications 1 à 3, **caractérisés en ce qu'**il s'agit, pour le composant émulsifiant C), de produits de transformation de polyisocyanates avec des poly(oxyde d'alkylène)-polyétheralcools monovalents présentant en moyenne statistique 5 à 35 unités d'oxyde d'éthylène.

5. Mélanges hydrophiles de polyisocyanates selon l'une quelconque des revendications 1 à 4, **caractérisés en ce qu'**il s'agit, pour le composant émulsifiant C), de produits de transformation des composants polyisocyanate A) et/ou B) avec de l'acide 2-(cyclohexylamino)-éthanesulfonique et/ou de l'acide 3-(cyclohexylamino)-propanesulfonique.

6. Mélanges hydrophiles de polyisocyanates selon la revendication 2, **caractérisés en ce que** les polyisocyanates modifiés par polyacrylate utilisés dans le composant A) contiennent en outre des unités polyéther de formule (II), 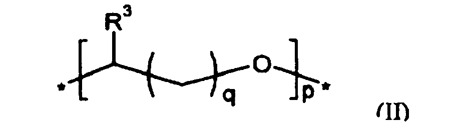 où
R³ représente hydrogène ou un radical C₁-C₁₀-alkyle et
p vaut un nombre entre 1 et 1000, et
q vaut 1 à 3,
et/ou des groupes sulfonate (sous forme de SO₃)
et/ou des groupes phosphate (sous forme de PO₄).

7. Procédé pour la préparation de mélanges hydrophiles de polyisocyanates selon l'une quelconque des revendications 1 à 5, **caractérisé en ce que** les composants polyisocyanate A) et le cas échéant B) sont mélangés avec un émulsifiant C) ionique et/ou non ionique et/ou un tel émulsifiant est généré in situ par transformation des composants polyisocyanate A) et le cas échéant B) avec des composés hydrophiles ioniques et/ou non ioniques réactifs par rapport aux isocyanates, les quantités des composants de départ étant choisies, indépendamment du procédé de préparation, de manière telle que l'émulsifiant se trouve en une quantité de 2 à 60% en poids, par rapport à la quantité totale des composants A) à C).

8. Utilisation des mélanges hydrophiles de polyisocyanates selon l'une quelconque des revendications 1 à 6 comme composants de départ lors de la préparation de matériaux synthétiques à base de polyuréthane ou comme composant réticulant pour des liants pour laques ou des composants pour liants pour laques solubles ou dispersibles dans l'eau.

9. Agents de revêtement contenant des polyisocyanates hydrophiles selon l'une quelconque des revendications 1 à 6.

10. Substrats revêtus par des agents de revêtement selon la revendication 9.
